# EUROPÄISCHE PATENTSCHRIFT

(11) **EP 2 311 597 B1**
(45) Veröffentlichungstag und Bekanntmachung des Hinweises auf die Patenterteilung: **02.04.2014**
(21) Anmeldenummer: 10177015.4
(22) Anmeldetag: 16.09.2010
(51) Int. Cl.: B23K 26/14, B23K 26/34, F01D 5/00, B23K 26/32, B23P 6/00

(54) **Verfahren zum Laser-Schweißen von Werkstücken aus hochwarmfesten Superlegierungen mit Steuerung mancher Laser-Schweissparameter zum Erreichen einer bestimmten Abkühlrate**
Method of laser welding workpieces from heat resistant superalloys with control of some laser welding parameters for reaching a particular cooling rate
Procédé de soudage laser de pièces en superalliages haute température avec contrôle de certains paramètres du soudage laser pour obtenir une vitesse de refroidissement particulière

(30) Priorität: 15.10.2009 DE 102009049518
(43) Veröffentlichungstag der Anmeldung: 20.04.2011
(60) Teilanmeldung: 11004777.6
(73) Patentinhaber: Siemens Aktiengesellschaft, 80333 München (DE); Fraunhofer-Gesellschaft zur Förderung der Angewandten Forschung e.V., 80686 München (DE)
(72) Erfinder: Arjakine, Nikolai, 10555 Berlin (DE); Bostanjoglo, Georg, 12161 Berlin (DE); Burbaum, Bernd, 52531 Übach-Palenberg (DE); Gasser, Andres, 52066 Aachen (DE); Jambor, Torsten, 50937 Köln (DE); Linnenbrink, Stefanie, 52372 Kreuzau (DE); Melzer-Jokisch, Torsten, 15366 Neuenhagen bei Berlin (DE); Ott, Michael, Dr., 45470 Mülheim an der Ruhr (DE); Pirch, Norbert, 52074 Aachen (DE); Wilkenhöner, Rolf, Dr., 14532 Kleinmachnow (DE)

(56) Entgegenhaltungen:
- WO-A1-2009/143909
- US-A- 5 453 329
- US-A- 6 024 792
- US-A- 6 120 624
- US-B1- 6 872 912

## Beschreibung

Die vorliegende Erfindung betrifft ein Verfahren zum Schweißen von Werkstücken, insbesondere von Gasturbinenwerkstücken, beispielsweise von Gasturbinenschaufeln gemäß dem Oberbegriff des Anspruchs 1 (siehe, z.B., US 6 024 792).

Laufschaufeln von Gasturbinen werden im Betrieb hohen Temperaturen und starken mechanischen Belastungen ausgesetzt. Für derartige Bauteile werden daher bevorzugt Nickelbasis-Superlegierungen verwendet, die durch Ausscheidung einer γ'-Phase gefestigt werden können. Dennoch können mit der Zeit Risse in den Laufschaufeln auftreten, die sich im Laufe der Zeit weiter ausdehnen. Solche Risse können etwa aufgrund der extremen mechanischen Belastung beim Betrieb einer Gasturbine entstehen, sie können aber auch bereits während des Herstellungsprozesses auftreten. Da das Herstellen von Turbinenschaufeln und anderen Werkstücken aus derartigen Superlegierungen aufwändig und kostenintensiv ist, ist man bestrebt, möglichst wenig Ausschuss in der Herstellung zu produzieren und eine lange Lebensdauer der hergestellten Produkte sicher zu stellen.

Im Betrieb befindliche Gasturbinenschaufeln werden regelmäßig gewartet und gegebenenfalls ausgetauscht, wenn aufgrund betriebsbedingter Beanspruchung ein einwandfreies Funktionieren nicht mehr ohne Weiteres sicher gestellt werden kann. Um einen weiteren Einsatz ausgetauschter Turbinenschaufeln zu ermöglichen, werden diese soweit möglich wieder aufgearbeitet. Sie können dann erneut in einer Gasturbine zum Einsatz kommen. Im Rahmen einer derartigen Wiederaufarbeitung kann bspw. ein Auftragsschweißen in beschädigten Bereichen nötig sein, um die ursprüngliche Wandstärke wieder herzustellen.

Auch Turbinenschaufeln, die bereits beim Herstellungsprozess Risse erhalten haben, können bspw. mit Auftragschweißen einsatztauglich gemacht werden, so dass der Ausschuss bei der Herstellung vermindert werden kann.

Die γ'-verstärkten Nickelbasis-Superlegierungen sind jedoch mittels konventioneller Schweißverfahren mit artgleichen Zusatzwerkstoffen derzeit nur schwer schweißbar. Ursache hierfür ist, dass Mikroseigerungen, also mikroskopische Entmischungen der Schmelze, vermieden werden müssen. Zudem kann der Schweißprozess selbst zum Generieren von Rissen im geschweißten Bereich während nachfolgender Wärmebehandlungen führen. Ursache hierfür sind Schweißeigenspannungen durch plastische Verformungen während des Wärmeeintrags beim Schweißen.

Um die schwierige Schweißbarkeit der γ'-gehärteten Nickelbasis-Superlegierungen zu umgehen, wird häufig mit duktilen Schweißzusatzstoffen, etwa mit Nickelbasislegierungen ohne γ '-Härtung, geschweißt. Ein typischer Vertreter einer solchen Nickelbasislegierung ohne γ'-Härtung ist beispielsweise IN625. Die Duktilität des nicht γ'-gehärteten Zusatzwerkstoffes erlaubt den Abbau von Schweißspannungen durch plastische Verformungen während der ersten Wärmebehandlung nach dem Schweißen. Allerdings besitzen die ungehärteten Legierungen im Vergleich zu γ'-gehärteten Nickelbasis-Superlegierungen geringere Hochtemperaturfestigkeit (sowohl geringe Zugfestigkeit als auch geringe Zeitstandfestigkeit). Es werden daher bevorzugt Schweißverfahren ohne duktile Zusatzwerkstoffe verwendet. Diese Verfahren können in zwei Klassen eingeteilt werden, nämlich Verfahren, in denen eine Überalterung des Grundmaterials zur Erhöhung der Duktilität mittels Vergröberung der γ'-Phase erfolgt, und Verfahren, in welchen der Schweißprozess bei einem vorgewärmten Substrat durchgeführt wird. Das Durchführen des Schweißprozesses an einem vorgewärmten Substrat vermindert die Schweißeigenspannungen durch Erholung während des Schweißprozesses.

Ein Schweißprozess mit vorangehender Überalterung ist beispielsweise in US 6,120,624 beschrieben, ein Schweißprozess, der an einem vorgewärmten Werkstück durchgeführt wird, beispielsweise in US 5,319,179.

Die beiden genannten Schweißverfahren ohne duktile Schweißzusatzwerkstoffe sind jedoch ebenfalls mit Nachteilen behaftet. So wird beispielsweise bei einer vor dem Schweißprozess durchgeführten Überalterung eine entsprechende Wärmebehandlung der γ'-härtbaren Nickelbasis-Superlegierung vor dem Schweißen durchgeführt, um die Überalterung der γ'-Phase zu bewirken. Dabei wird die Duktilität des Grundwerkstoffes deutlich erhöht. Diese Erhöhung der Duktilität ermöglicht es, den Werkstoff bei Raumtemperatur zu schweißen. Zudem kann er kaltgerichtet werden. Weiterhin ermöglicht eine derartige Wärmebehandlung den Einsatz von Nickelbasis-Superlegierungen wie beispielsweise Rene41 oder Haynes282 als Schweißzusatzstoff. Diese bilden zwar γ'-Phasen im Gefüge, aber jedoch nur mit einem deutlich geringeren Volumenanteil als die typischen γ '-haltigen Nickelbasis-Superlegierungen, die heutzutage für Gasturbinen-Heißgaskomponenten wie etwa Gasturbinenschaufeln Verwendung finden (beispielsweise IN738LC, IN939, Rene80, IN6203DS, PWA1483SX, Alloy 247, etc.). Deshalb können selbst dann, wenn eine Überalterung vor dem Schweißprozess erfolgt ist, keine voll-strukturellen Schweißungen erfolgen.

Wenn eine Vorwärmung der Turbinenschaufel erfolgt, wird die Temperaturdifferenz und der damit auftretende Spannungsgradient zwischen der Schweißstelle und dem Rest der Turbinenschaufel verringert, wodurch die Bildung von Schweißrissen in Bauteilen aus Nickelbasis-Superlegierungen vermieden werden kann. Solche Verfahren, in denen eine Vorheizung der Turbinenschaufel auf Temperaturen zwischen 900°C und 1000°C mittels Induktionsspulen erfolgt, müssen jedoch unter Schutzgas durchgeführt werden, was den Schweißprozess verkompliziert und verteuert. Zudem kann dieses Verfahren in Folge mangelnder Zugänglichkeit des in einem Schutzgasbehälter befindlichen Werkstückes nicht an allen Bereichen des Werkstückes durchgeführt werden.

Es besteht daher Bedarf an einem alternativen Schweißverfahren zum Auftragschweißen, welches sich insbesondere für y'-gehärtete Nickelbasis-Superlegierungen eignet und die oben genannten Nachteile nicht oder nur in verringertem Maße aufweist. Es ist eine weitere Aufgabe der Erfindung, eine zur Durchführung des erfindungsgemäßen Verfahrens geeignete Schweißvorrichtung zur Verfügung zu stellen.

Die erste Aufgabe wird durch ein Verfahren zum Auftragschweißen nach Anspruch 1 gelöst.

Die abhängigen Ansprüche enthalten vorteilhafte Ausgestaltungen der Erfindung und können vorteilhafterweise beliebig miteinander kombiniert werden.

In dem erfindungsgemäßen Verfahren zum Schweißen von Werkstücken aus hochwarmfesten Superlegierungen erfolgt ein Aufbringen von Schweißzusatzwerkstoff auf die Werkstückoberfläche mittels einer Wärmeeintragszone und einer Zufuhrzone zur Zufuhr des Schweißzusatzwerkstoffes in die Wärmeeintragzone. Die Wärmeeintragszone und die Zufuhrzone werden während des Schweißens über die Werkstückoberfläche bewegt. Die Bewegung kann entlang einer Schweißrichtung erfolgen, bspw. auf einem linearen Pfad oder auf einem um die Schweißrichtung oszillierenden Pfad. Im erfindungsgemäßen Verfahren sind die Schweißparameter so gewählt, dass die Abkühlrate bei der Erstarrung des Materials mindestens 8000 K/s beträgt.

Die zum Einstellen der Abkühlrate von mindestens 8000 K/s bei der Erstarrung des Materials zur Verfügung stehenden Hauptparameter sind die Verfahrensparameter bzgl. der Schweißleistung und dem Durchmesser der Wärmeeintragszone, bspw. in Form einer Laserleistung und einem Durchmesser des Laserstrahls, der Vorschub (die Prozessgeschwindigkeit) und ggf. der Strom an zugeführtem Schweißzusatzwerkstoff. In Abhängigkeit von der Art der verwendeten Laserquelle lässt sich durch geeignete Anpassung dieser Parameter die geforderte Abkühlrate für das zu schweißende Material einstellen. Die Prozessgeschwindigkeit kann hierbei mindestens 250 mm/min, insbesondere mehr als 500 mm/min, betragen. Beispielsweise können bei einer Prozessgeschwindigkeit von mehr als 500 mm/min die Verfahrensparameter bzgl. der Schweißleistung und dem Durchmesser der Wärmeeintragszone so eingestellt werden, dass die Abkühlrate bei der Erstarrung des Materials mindestens 8000 K/s beträgt.

Durch die hohe Abkühlrate und hohe Erstarrungsgeschwindigkeit wird der Verteilungskoeffizient soweit erhöht, dass Mikroseigerungen, d.h. mikroskopische Entmischungen der Schmelze, weitgehend vermieden werden. Die Schmelze im Schweißgut erstarrt dendritisch, also in einer baumartigen Struktur, wobei die Wachstumsrichtungen der Dendriten entlang der Schweißspur variieren, da die Orientierung der möglichen Wachstumsrichtungen der Dendriten zum Temperaturgradienten auf der Erstarrungsfront variiert. Diejenige Wachstumsrichtung mit der geringsten Neigung zum Temperaturgradienten bzw. mit der kleinsten Wachstumsgeschwindigkeit setzt sich durch. Darüber hinaus bilden sich Keime vor der Erstarrungsfront, die während der Erstarrung von der Erstarrungsfront eingeholt werden. Diese Keime initiieren Dendritenwachstumsrichtungen, die statistisch verteilt sind.

Das erfindungsgemäße Verfahren eignet sich bspw. zum Schweißen von Werkstücken aus einer γ'-haltigen Nickelbasis-Superlegierung mittels eines Schweißzusatzwerkstoffes, der ein y'-bildendes Nickelbasis-Superlegierungsmaterial ist. Es können dann eine hohe Festigkeit im Schweißgut aufgrund der Verwendung artgleichen Zusatzwerkstoffes und eine akzeptable Schweißqualität, d. h. eine sehr geringe Anzahl an Rissen und eine sehr geringe mittlere Risslänge, erzielt werden. Aufgrund der Möglichkeit den Schweißprozess bei Raumtemperatur mit einer lokal am Schmelzbad sich befindenden Schutzgasatmosphäre durchzuführen, erreicht das erfindungsgemäße Schweißverfahren eine hohe Wirtschaftlichkeit.

Das Verfahren kann insbesondere als Auftragschweißverfahren, in dem das Aufbringen von Schweißzusatzwerkstoff lagenweise erfolgt, ausgebildet sein. Hierbei können die Schweißrichtungen von aufeinander folgenden Lagen gegeneinander gedreht sein, insbesondere um 90°. Durch die Drehung der Schweißrichtung von unterschiedlichen Lagen können Anbindungsfehler zwischen den Lagen vermieden werden, insbesondere dann, wenn die Wärmeeintragszone und die Zufuhrzone zudem entlang der Schweißrichtung auf einer um die Schweißrichtung oszillierenden Bahn über die Werkstückoberfläche bewegt werden.

Die unregelmäßig verteilte Dendritenorientierung findet sich hauptsächlich in der oberen Hälfte der Schweißspur. Vorteilhafterweise wird daher im erfindungsgemäßen Verfahren eine zuvor aufgetragene Lage in weniger als der Hälfte ihrer Lagenstärke wieder aufgeschmolzen. Dabei wird die Kristallstruktur der wieder aufgeschmolzenen Bereiche beim Erstarren übernommen. Durch die geringe Wiederaufschmelztiefe wird gewährleitstet, dass die Erstarrungsfront auf einen Bereich mit unregelmäßig verteilten Dendritenorientierungen aufsetzt. Dies führt im Resultat bei einer Mehrlagenschweißung dazu, dass ein Polykristall mit Körnern generiert wird, deren Durchmesser im Mittel sehr klein sind. Korngrenzen stellen allgemein eine Schwachstelle bezüglich der Rissbildung bei transienten Spannungen während des Schweißprozesses oder einer nachfolgenden Wärmebehandlung dar. Durch die geringe Ausdehnung einer Korngrenze in der Ebene und deren unregelmäßige Orientierung in dem mit dem erfindungsgemäßen Verfahren geschweißten Schweißgut wird das Schweißgut gegenüber der Rissbildung unempfindlicher, so dass der Schweißprozess bei Raumtemperatur durchgeführt werden kann.

Das erfindungsgemäße Verfahren kann sowohl bei polykristallinen als auch bei gerichtet erstarrten oder einkristallinen Substraten angewandt werden. In allen genannten Fällen kann eine γ'-haltige Nickelbasis-Superlegierung als Schweißzusatzstoff benutzt werden.

Im Rahmen des erfindungsgemäßen Schweißverfahrens kann auf das Aufbringen des Schweißzusatzwerkstoffes eine Wärmebehandlung erfolgen. Mit einer an das Schweißgut angepassten Wärmebehandlung kann so die gewünschte γ'-Morphologie eingestellt werden. Dies dient zur weiteren Verbesserung der Festigkeit des Schweißgutes.

Die Relativbewegung kann insbesondere so gesteuert sein, dass die Wärmeeintragszone und die Zufuhrzone entlang einer Schweißrichtung auf einem um die Schweißrichtung oszillierenden Pfad über die Werkstückoberfläche bewegt werden. Außerdem kann die Steuereinheit die Relativbewegung mit oder ohne Oszillation so durchführen, dass die Schweißrichtungen bei aufeinander folgenden Lagen gegeneinander verdreht sind, bspw. um 90°.

Die erfindungsgemäße Schweißvorrichtung ermöglicht das Durchführen des erfindungsgemäßen Schweißverfahrens durch Verwendung eines Steuerprogramms, welches die im Rahmen des Verfahrens beschriebenen Schweißparameter, etwa die Bahn der Relativbewegung zwischen Wärmequelle und Zufuhreinrichtung einerseits sowie dem Werkstück andererseits, die Prozessgeschwindigkeit, die Laserleistung, den Strahldurchmesser, etc., für den Schweißprozess enthält. Die im Rahmen des Verfahrens beschriebenen Verfahrensparameter und Mechanismen helfen, die Bildung von Rissen wie etwa Erstarrungsrissen oder Wiederaufschmelzrissen, im Grundwerkstoff und der Schmelze zu unterdrücken. Dies insbesondere auch dann, wenn sowohl der Grundwerkstoff als auch der Schweißzusatzwerkstoff γ '-bildende Nickelbasis-Superlegierungen sind. Daraus resultiert eine Qualität der mit dem erfindungsgemäßen Verfahren und der erfindungsgemäßen Schweißvorrichtung erzielbaren Schweißung, die für eine strukturelle Schweißung, etwa zum Zwecke der Reparatur oder Fügung in einem hoch belasteten Bereich einer Turbinenschaufel oder eines anderen Werkstückes, akzeptabel ist.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt beispielhaft eine Gasturbine in einem Längsteilschnitt.
Figur 2 zeigt eine Turbinenschaufel in einer perspektivischen Ansicht.
Figur 3 zeigt eine Gasturbinenbrennkammer in einer teilweise geschnittenen perspektivischen Darstellung.
Figur 4 zeigt in einer schematischen Darstellung eine Schweißvorrichtung.
Figur 5 zeigt die Schweißbahn für eine erste Lage an Schweißzusatzmaterial.
Figur 6 zeigt die Schweißbahn für eine zweite Lage an Schweißzusatzmaterial.

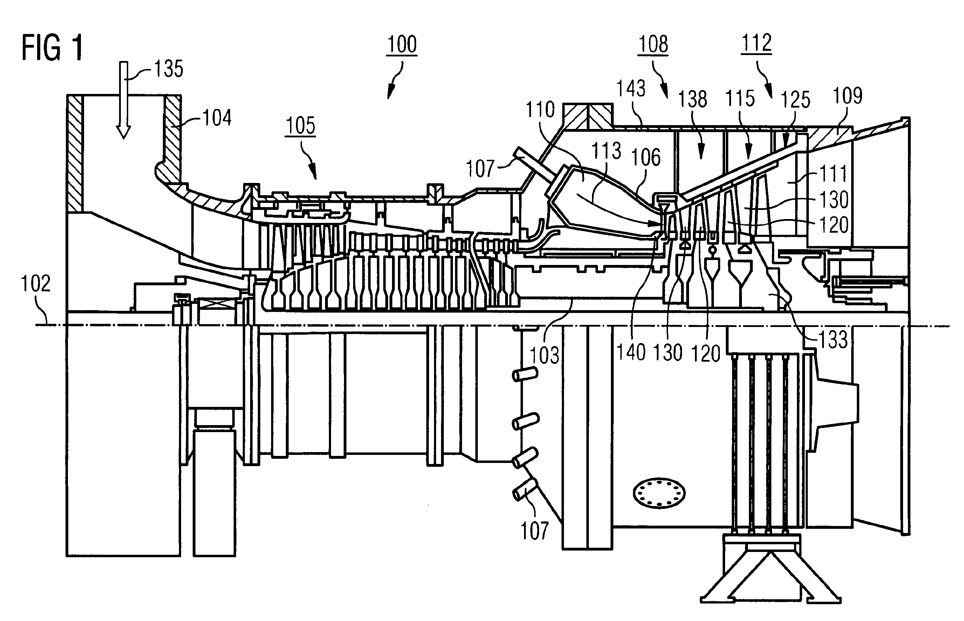

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

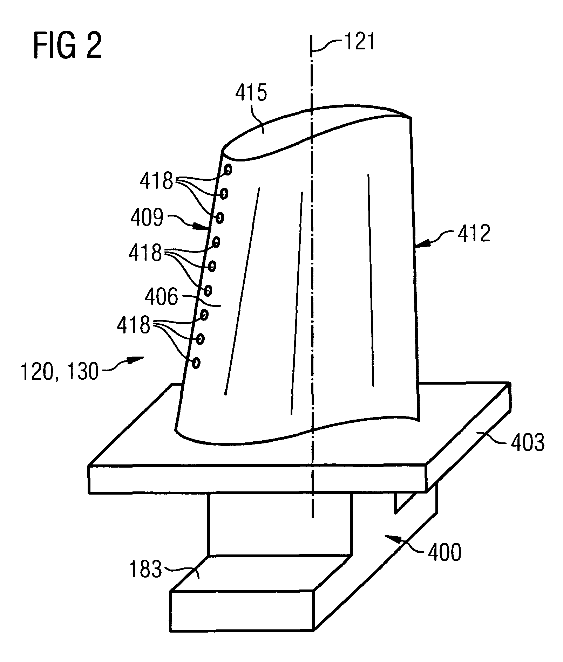

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

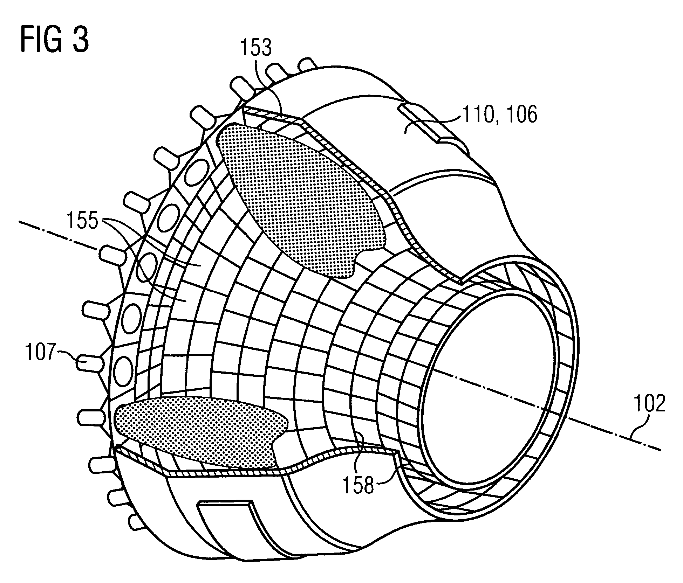

Die Figur 3 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

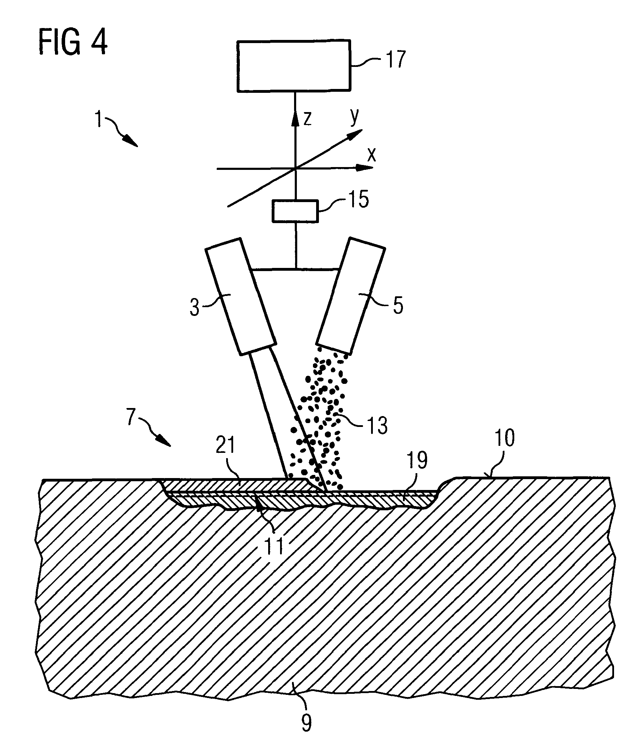

Figur 4 zeigt in einer stark schematisierten Darstellung eine Schweißvorrichtung 1.

Diese umfasst einen Laser 3 und eine Pulverzufuhreinrichtung 5, mit der ein pulverförmiger Schweißzusatzwerkstoff auf den zu schweißenden Bereich eines Werkstücks 9 aufgebracht werden kann. Mittels der Laserstrahlung wird eine Wärmeeintragszone 11 auf der Werkstückoberfläche gebildet, in welche auch das Pulver 13 von der Pulverzufuhreinrichtung 5 eingebracht wird. Der Laser ist vorzugsweise ein 300W-Laser, insbesondere ein Nd-YAG Laser, ganz insbesondere mit λ = 1,06µm. Die Laserleistung beträgt, gemäß der Erfindung, zwischen 100W und 300W und vorzugsweise zwischen 100W und 200W, ganz insbesondere zwischen 100W und 150W. So wird vorteilhafterweise das Schweißmaterial gut aufgeschmolzen und auch der Untergrund angeschmolzen, damit sich eine dichte Schweißstelle ergibt.

Der Laser 3 und die Pulverzufuhreinrichtung 5 sind an einer Scaneinrichtung 15 angeordnet, welche ein Verschieben des Lasers 3 und der Pulverzufuhreinrichtung 5 in zwei Dimensionen entlang der Bauteiloberfläche (x- und y- Richtungen in Figur 4) mit dem zu schweißenden Bereich 7 ermöglicht. Die Prozessgeschwindigkeit mindestens 250mm/min beträgt, insbesondere 400mm/min - 600mm/min, ganz insbesondere 500mm/min. So ist ein vorteilhafter Wärmeeintrag in das Schweißmaterial und das Substrat möglich.

Weiterhin ermöglicht die Scanvorrichtung 15 des vorliegenden Ausführungsbeispiels ein Verschieben des Lasers 3 und der Pulverzufuhreinrichtung 5 senkrecht zur Bauteiloberfläche (z-Richtung in Figur 4). Mit Hilfe der Scaneinrichtung 15 kann somit die Wärmeeintragszone und die Auftreffzone des Pulvers entlang eines vorgegebenen Pfades verschoben werden. Als Scaneinrichtung kann bspw. ein Roboterarm Verwendung finden. Der Durchmesser des Laserstrahls beträgt, gemäß der Erfindung, 500µm bis 800µm, ganz insbesondere 600µm. Somit kann das zugeführte Schweißmaterial vorteilhaft erwärmt werden.

Die Steuerung der von der Scaneinrichtung 15 vermittelten Bewegung erfolgt durch eine Steuereinheit 17, die auch die übrigen Parameter des Schweißprozesses steuert. Im Unterschied zum vorliegenden Ausführungsbeispiel kann die Steuerung der übrigen Parameter des Schweißprozesses aber auch durch eine zusätzliche Steuerung, also getrennt von der Steuerung des Bewegungsablaufes, erfolgen. Weiterhin kann im Unterschied zum dargestellten Ausführungsbeispiel statt der Scaneinrichtung 15 zum Bewegen des Lasers 3 und der Pulverzufuhreinrichtung 5 auch eine bewegliche Bauteilhalterung Verwendung finden. Im Rahmen der Erfindung ist lediglich die Relativbewegung zwischen dem Laser 3 sowie der Pulverzufuhreinrichtung 5 einerseits und dem Werkstück 9 von Bedeutung.

Das erfindungsgemäße Verfahren zum Auftragschweißen einer Werkstückoberfläche kann zum Materialauftrag, insbesondere zum mehrlagigen Materialauftrag, auf den zu schweißenden Bereich 7 eines Bauteils 9 Verwendung finden. Das Bauteil 9 braucht dabei weder vorgewärmt, noch mittels einer Wärmebehandlung überaltert zu werden.

Nachfolgend wird das Verfahren anhand eines Auftragschweißens auf der Oberfläche 10 einer Turbinenschaufel 9 als Werkstück beschrieben. Die Turbinenschaufel des vorliegenden Ausführungsbeispiels besteht aus einer γ'-verstärkten Nickelbasis-Superlegierung, beispielsweise aus IN738LC, IN939, Rene80, IN6203DS, PWA1483SX, Alloy 247, etc. Der zu schweißende Bereich 7 in der Oberfläche 10 der Turbinenschaufel 9 wird lagenweise auftraggeschweißt, wobei die Wärmeeintragzone zusammen mit dem Auftreffbereich für das Pulver 13 entlang einer Schweißrichtung über den zu schweißenden Bereich 7 der Turbinenschaufel 9 bewegt werden. Das Pulver 13 ist im vorliegenden Fall ein Pulver aus einer γ'-haltigen Nickelbasis-Superlegierung, bspw. aus IN 738LC, IN 939, Rene 80, IN 6203DS, PWA 1483, Alloy 247. etc.

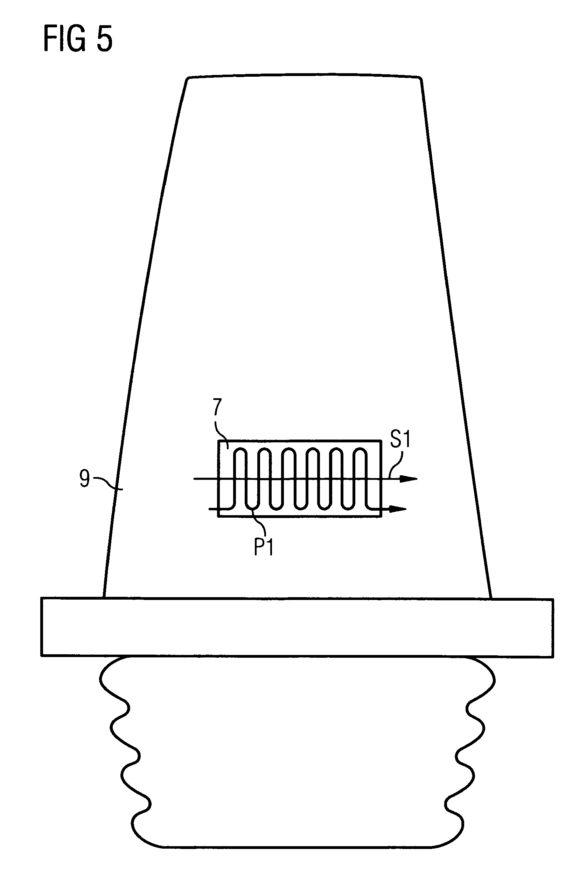

Der Pfad P1, den die Wärmeeintragzone 11 sowie der Auftreffbereich des Pulvers 13 beim Auftragschweißen der ersten Lage auf dem zu schweißenden Bereich 7 zurücklegen, ist schematisch in Figur 5 dargestellt. Die Figur zeigt die Turbinenschaufel 9 mit dem zu schweißenden Bereich 7 und der Schweißrichtung S1 beim Auftragschweißen der ersten Lage 19. Die Wärmeintragzone 11, die gleichzeitig den Auftreffbereich für das Pulver 13 darstellt, wird jedoch nicht linear entlang der Schweißrichtung S1 verschoben, sondern sie oszilliert während der Verschiebung entlang der Schweißrichtung gleichzeitig in eine Richtung senkrecht zur Schweißrichtung. Dadurch folgen die Wärmeeintragzone 11 und der Auftreffbereich des Pulvers 13 einen mäanderförmigen Pfad P1 über den zu schweißenden Bereich 7.

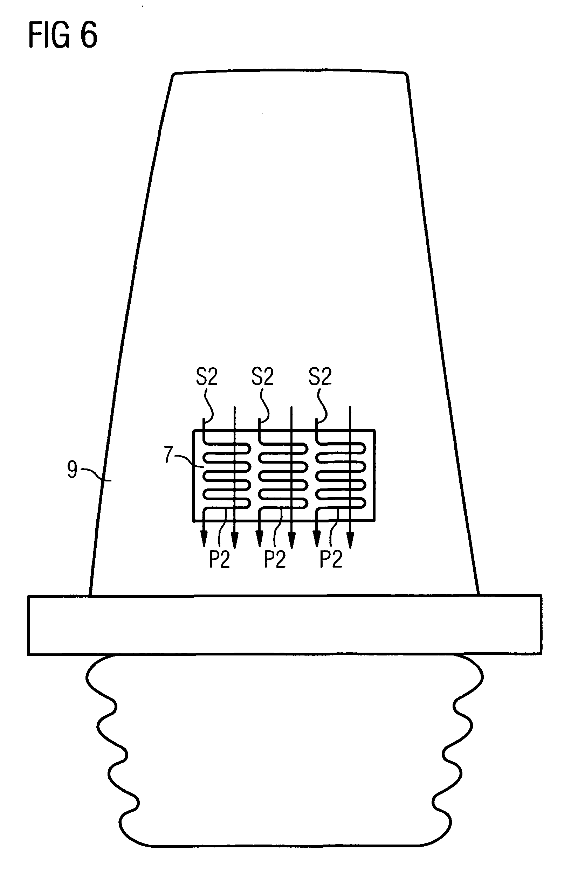

Für das Auftragschweißen der zweiten Lage 21 (Figur 4) werden der Laser 3 und die Pulverzufuhreinrichtung 5 ein wenig entlang der z-Richtung der Scaneinrichtung 15 verschoben. Außerdem wird im vorliegenden Ausführungsbeispiel die Schweißrichtung S2 gegenüber der Schweißrichtung S1 für die erste Lage um 90° gedreht. Der Pfad P2 der Wärmeeintragzone 11 und des Auftreffbereiches für das Pulver 13 beim Auftragschweißen der zweiten Lage 21 ist in Figur 6 dargestellt. Auch beim Auftragschweißen der zweiten Lage 21 oszilliert die Wärmeeintragzone 11 zusammen mit dem Auftreffbereich des Pulvers 13 in einer Richtung senkrecht zur Schweißrichtung S2. Ingesamt ergibt sich daher ein mäanderförmiger Pfad P2 der Wärmeeintragzone 11 und des Auftreffbereichs für das Pulver 13 über den zu schweißenden Bereich 7.

Die im Rahmen des Ausführungsbeispiels beschriebenen Pfade stellen nur eine von verschiedenen möglichen Varianten dar. Grundsätzlich gibt es mehrere Möglichkeiten die Schweißung durchzuführen: 1. unidirektionales oder 2. bidirektionales (z.B. mäanderförmiges) Auftragschweißen. Bei jeder dieser Varianten können die Spuren (Pfade) der 2. Lage parallel versetzt oder senkrecht zu den Spuren (Pfaden) der ersten Lage geschweißt werden. Alle diese Varianten können im Rahmen des erfindungsgemäßen Verfahrens zur Anwendung kommen.

Beim Verfahren des Lasers und der Pulverzufuhreinheit kann die Oszillation so gewählt werden, dass mit einem einzigen Pfad entlang der Schweißrichtung der gesamte zu schweißende Bereich 7 überstrichen wird, wie dies in Figur 5 dargestellt ist, oder so, dass nur ein Teil des zu schweißenden Bereiches 7 überstrichen wird und zum Auftragschweißen des gesamten Bereiches mehrere nebeneinander verlaufende Pfade P2 in Schweißrichtung S2 abgefahren werden, wie dies in Figur 6 dargestellt ist.

Das Verfahren der Wärmeeintragzone 11 und des Auftreffbereichs des Pulvers 13 entlang des Pfades P1 bzw. P2 erfolgt im vorliegenden Ausführungsbeispiel mit einer Prozessgeschwindigkeit von mindestens 500 mm/min. Die Laserleistung, der Strahldurchmesser und der Pulverstrom sind dabei so gewählt, dass die Abkühlrate des überstrichenen Bereiches bei der Erstarrung größer als 8000 K/s ist. Beim Auftragen der zweiten Lage 21 sind die Prozessparameter bezüglich Laserleistung und Strahldurchmesser außerdem so gewählt, dass die Wiederaufschmelztiefe, bis in welche die erste Lage 19 wieder aufgeschmolzen wird, weniger als 50 % der Spurhöhe der ersten Lage 19, beträgt. Die Wiederaufschmelztiefe ist in Figur 4 gestrichelt angedeutet. Grundsätzlich sind auch andere als die im vorliegenden Beispiel angegebene Prozessgeschwindigkeit möglich, wobei dann die übrigen Parameter Laserleistung, Strahldurchmesser und Pulverstrom entsprechend angepasst werden müssen.

Durch die hohe Abkühlrate und die hohe Erstarrungsgeschwindigkeit wird der Verteilungskoeffizient soweit erhöht, dass Mikroseigerungen weitgehend vermieden werden. Die durch die Wärmeeintragzone 11 herbeigeführte Schmelze erstarrt dendritisch, wobei die Kristallstruktur von der in dem wieder aufgeschmolzenen Bereich vorliegenden Kristallstruktur übernommen wird. Dabei variieren die Wachstumsrichtungen der Dendriten entlang eines Pfades P1, P2. Ursache hierfür ist, dass die Orientierung der möglichen Wachstumsrichtungen der Dendriten zum Temperaturgradienten variiert, wobei sich die Wachstumsrichtung mit der geringsten Neigung zum Temperaturgradienten bzw. mit der kleinsten Wachstumsgeschwindigkeit durchsetzt. Außerdem initiieren Keime, die sich vor der Erstarrungsfront bilden und die während der Erstarrung von der Erstarrungsfront eingeholt werden, Dendritenwachstumsrichtungen, die statistisch verteilt sind. Diese unregelmäßig verteilten Dendritenorientierungen finden sich vorwiegend in der oberen Hälfte einer Lage 19. Mit der geringen Wiederaufschmelztiefe wird daher gewährleistet, dass die Erstarrungsfront auf einen Bereich mit unregelmäßig verteilten Dendritenorientierungen aufsetzt, was bei einer Mehrlagenauftragschweißung dazu führt, dass ein Polykristall mit Körnern generiert wird, deren Durchmesser im Mittel sehr klein sind. Dadurch wird der geschweißte Bereich der Turbinenschaufel 9 gegenüber Rissbildung unempfindlich.

Nachdem das Auftragen der erforderlichen Anzahl von Lagen 19, 21 erfolgt ist, kann die Turbinenschaufel 9 einer Wärmebehandlung unterzogen werden die dazu führt, dass sich die gewünschte γ'-Morphologie einstellt. Dies dient der weiteren Verbesserung der Festigkeit des geschweißten Bereiches der Turbinenschaufel 9.

Mit dem erfindungsgemäßen Verfahren kann eine Auftragschweißung bei Zimmertemperatur und ohne vorherige Überalterung des zu schweißenden Bauteils erfolgen, wobei die Entstehung von Erstarrungsrissen und Wiederaufschmelzrissen unterdrückt ist. Dies führt im Ergebnis zu einer Qualität der Schweißung, die für eine strukturelle Schweißung insbesondere von hochbelasteten Bereichen von Gasturbinenschaufeln, aber auch von anderen Bauteilen, akzeptabel ist. Gleichzeitig erfolgt nur eine sehr geringe Beeinflussung des Grundwerkstoffes, da aufgrund der kleinen Wärmeeinflusszone (es erfolgt kein Vorheizen) und der Unterdrückung von Wiederaufschmelzrissen in der Wärmeeinflusszone nur ein sehr geringer Wärmeeintrag in das Substrat erfolgt.

## Patentansprüche

1. Verfahren zum Schweißen von Werkstücken (9) aus hochwarmfesten Superlegierungen,
in dem ein Aufbringen von Schweißzusatzwerkstoff (13) auf die Werkstückoberfläche (10) mittels einer Wärmeeintragszone (11) und
einer Zufuhrzone zur Zufuhr des Schweißzusatzwerkstoffes in die Wärmeeintragszone (11) erfolgt,
wobei die Wärmeeintragszone (11) und die Zufuhrzone einerseits und die Werkstückoberfläche (10) andererseits relativ zueinander bewegt werden, wobei
zumindest die Schweißparameter Schweißleistung, Prozessgeschwindigkeit, Durchmesser eines Schweißstrahls so gewählt sind,
dass die Abkühlrate bei der Erstarrung des Materials mindestens 8000 Kelvin pro Sekunde (K/s) beträgt,
wobei die Prozessgeschwindigkeit mindestens 250mm/min beträgt, **dadurch gekennzeichnet, dass**
die Laserleistung 100W bis 300W beträgt und, dass
der Durchmesser eines Laserstrahls 500µm bis 800µm beträgt.

2. Verfahren nach Anspruch 1,
**dadurch gekennzeichnet, dass**
die Schweißparameter bezüglich der Schweißleistung sowie dem Durchmesser der Wärmeeintragszone so eingestellt sind, dass die Abkühlrate bei der Erstarrung des Materials mindestens 8000 Kelvin pro Sekunde (K/s) beträgt.

3. Verfahren nach Anspruch 1 oder 2,
bei dem die Schweißnaht durch lageweises Aufbringen von Schweißzusatzwerkstoff (13) erzeugt wird.

4. Verfahren nach Anspruch 3,
bei dem die vorherige Lage (19) aufgeschmolzen wird.

5. Verfahren nach Anspruch 4,
**dadurch gekennzeichnet, dass**
eine zuvor aufgetragene Lage (19) in weniger als der Hälfte ihre Lagenstärke wieder aufgeschmolzen wird.

6. Verfahren nach Anspruch 2, 3, 4 oder Anspruch 5,
**dadurch gekennzeichnet, dass**
für jede Lage (19, 21) die Wärmeeintragszone (11) und die Zufuhrzone entlang einer Schweißrichtung (S1, S2) relativ zur Werkstückoberfläche (10) bewegt werden und
die Schweißrichtungen (S1, S2) von aufeinander folgenden Lagen (19, 21) gegeneinander gedreht sind.

7. Verfahren nach einem der Ansprüche 1 bis 6,
**dadurch gekennzeichnet, dass**
die Wärmeeintragszone (11) und
die Zufuhrzone
entlang einer Schweißrichtung (S1, S2) auf einem um die Schweißrichtung oszillierenden Pfad (P1, P2) relativ zur Werkstückoberfläche (10) bewegt werden.

8. Verfahren nach einem der Ansprüche 1 bis 7,
**dadurch gekennzeichnet, dass**
das Werkstück (9) eine γ'-haltigen Nickelbasis-Superlegierung aufweist,
insbesondere daraus besteht und
der Schweißzusatzwerkstoff (13) ein γ'-bildendes Nickelbasis-Superlegierungsmaterial ist.

9. Verfahren nach einem der Ansprüche 1 bis 8,
**dadurch gekennzeichnet, dass**
auf das Aufbringen des Schweißzusatzwerkstoffes (13) eine Wärmebehandlung folgt.

10. Verfahren nach einem der Ansprüche 1 bis 9,
bei dem ein 300W-Laser verwendet wird.

11. Verfahren nach Anspruch 10,
bei dem ein Nd-YAG Laser verwendet wird,
insbesondere mit λ = 1.06µm.

12. Verfahren nach einem der vorherigen Ansprüche,
bei dem eine polykristalline Schweißnaht (19, 21) erzielt wird.

## Claims

1. Method for welding workpieces (9) of high-temperature superalloys,
in which welding filler (13) is applied to the workpiece surface (10) by means of a heat input zone (11) and
a supply zone for supplying the welding filler into the heat input zone (11),
the heat input zone (11) and the supply zone on the one hand and the workpiece surface (10) on the other hand being moved in relation to one another,
at least the welding parameters welding power, speed of the process, diameter of a welding beam being chosen such that the cooling rate during the solidifying of the material is at least 8000 Kelvins per second (K/s),
the speed of the process being at least 250 mm/min, **characterized in that**
the laser power is 100 W to 300 W and **in that** the diameter of a laser beam is 500 µm to 800 µm.

2. Method as claimed in Claim 1,
**characterized in that**
the welding parameters with respect to the welding power and the diameter of the heat input zone are set such that the cooling rate during the solidifying of the material is at least 8000 Kelvins per second (K/s).

3. Method as claimed in Claim 1 or 2,
in which the weld seam is produced by applying welding filler (13) layer by layer.

4. Method as claimed in Claim 3,
in which the previous layer (19) is melted.

5. Method as claimed in Claim 4,
**characterized in that**
a previously applied layer (19) is remelted in less than half its layer thickness.

6. Method as claimed in Claims 2, 3, 4 or Claim 5, **characterized in that**
for each layer (19, 21), the heat input zone (11) and the supply zone are moved in relation to the workpiece surface (10) along a welding direction (S1, S2) and
the welding directions (S1, S2) of successive layers (19, 21) are turned with respect to one another.

7. Method as claimed in one of Claims 1 to 6, **characterized in that**
the heat input zone (11) and
the supply zone
are moved in relation to the workpiece surface (10) along a welding direction (S1, S2) on a path (P1, P2) oscillating around the welding direction.

8. Method as claimed in one of Claims 1 to 7,
**characterized in that**
the workpiece (9) comprises a γ'-containing nickel-based superalloy,
in particular consists thereof and
the welding filler (13) is a γ'-forming nickel-based superalloy material.

9. Method as claimed in one of Claims 1 to 8,
**characterized in that**
the application of the welding filler (13) is followed by a heat treatment.

10. Method as claimed in one of Claims 1 to 9,
in which a 300 W laser is used.

11. Method as claimed in Claim 10,
in which an Nd-YAG laser is used,
particularly with λ = 1.06 µm.

12. Method as claimed in one of the preceding claims,
in which a polycrystalline weld seam (19, 21) is achieved.

## Revendications

1. Procédé de soudage de pièces ( 9 ) en superalliages très résistants à la chaleur,
dans lequel on effectue un dépôt de matériau ( 13 ) d'apport de soudure à la surface ( 10 ) de la pièce au moyen d'une zone ( 11 ) d'apport de chaleur et
d'une zone d'amenée du matériau d'apport de soudure dans la zone ( 11 ) d'apport de chaleur,
la zone ( 11 ) d'apport de chaleur et la zone d'amenée, d'une part, et la surface ( 10 ) de la pièce, d'autre part, étant déplacées relativement les unes par rapport à l'autre,
dans lequel on choisit au moins le paramètre de soudage, puissance de soudage, vitesse de l'opération, diamètre d'un faisceau de soudage de manière
à ce que la vitesse de refroidissement, lors de la solidification du matériau, soit d'au moins 8000 Kelvin à la seconde ( K/s ),
la vitesse de l'opération étant au moins de 250 mm/min, **caractérisé en ce que**
la puissance laser va de 100 W à 300 W et **en ce que** le diamètre d'un faisceau laser va de 500 µm à 800 µm.

2. Procédé suivant la revendication 1,
**caractérisé en ce que**
on règle le paramètre de soudage en ce qui concerne la puissance de soudage, ainsi que le diamètre de la zone d'apport de chaleur, de manière à ce que la vitesse de refroidissement, lors de la solidification du matériau, soit d'au moins 8000 Kelvin à la seconde ( K/s ).

3. Procédé suivant la revendication 1 ou 2,
dans lequel on produit le cordon de soudure par dépôt, couche par couche, de matériau ( 13 ) d'apport de soudure.

4. Procédé suivant la revendication 3,
dans lequel on fait fondre la couche ( 19 ) précédente.

5. Procédé suivant la revendication 4,
**caractérisé en ce que**
on fait fondre à nouveau une couche ( 19 ) déposée auparavant dans moins de la moitié de son épaisseur.

6. Procédé suivant la revendication 2, 3, 4 ou 5,
**caractérisé en ce que**
pour chaque couche ( 19, 21 ), on déplace la zone ( 11 ) d'apport de chaleur et la zone d'amenée le long d'une direction ( S1, S2 ) de soudage par rapport à la surface ( 10 ) de la pièce et les directions ( S1, S2 ) de soudage de couches ( 19, 21 ), qui se succèdent l'une à l'autre, sont tournées l'une par rapport à l'autre.

7. Procédé suivant l'une des revendications 1 à 6,
**caractérisé en ce que**
la zone ( 11 ) d'apport de chaleur et
la zone d'amenée
sont déplacées par rapport à la surface ( 10 ) de la pièce le long d'une direction ( S1, S2 ) de soudage sur un trajet ( P1, P2 ) oscillant autour de la direction de soudage.

8. Procédé suivant l'une des revendications 1 à 7,
**caractérisé en ce que**
la pièce ( 9 ) comporte un superalliage à base de nickel à teneur γ',
en en étant notamment constituée et
le matériau ( 13 ) d'apport de soudure est un matériau de superalliage à base de nickel formant du γ'.

9. Procédé suivant l'une des revendications 1 à 8,
**caractérisé en ce que**
un traitement thermique suit le dépôt du matériau ( 13 ) d'apport de soudure.

10. Procédé suivant l'une des revendications 1 à 9,
dans lequel on utilise un laser à 300 W.

11. Procédé suivant la revendication 10,
dans lequel on utilise un laser Nd-YAG,
avec notamment λ = 1,06 µm.

12. Procédé suivant l'une des revendications précédentes,
on produit un cordon ( 19, 21 ) de soudure polycristallin.
